# EUROPÄISCHE PATENTANMELDUNG

(11) **EP 0 671 586 A1**
(43) Veröffentlichungstag der Anmeldung: **13.09.1995**
(21) Anmeldenummer: 95101806.8
(22) Anmeldetag: 10.02.1995
(51) Int. Cl.: F23D 14/18

(54) **Katalytischer Brenner**

(30) Priorität: 11.03.1994 DE 4408186; 15.03.1994 DE 4408714
(71) Anmelder: Buderus Heiztechnik GmbH, D-35576 Wetzlar (DE); Nefit- Fasto B.V., NL-7418 BB Deventer (NL)
(72) Erfinder: Geibel, Tobias, D-35625 Hüttenberg (DE); Vloon, Paulus Jacobus, NL-7422 Deventer (NL)

(57) **Zusammenfassung**

Der Brenner besteht aus einem im Wasserraum eines Wassererwärmers (1) angeordneten, katalytischen Brenner (3), dem in Strömungsrichtung des Brenngas-Luft-Gemisches ein Startbrenner (4) folgt. Es schließt sich ein ebenfalls katalytisch wirkender Nachbrenner (5) an. Der Startbrenner (4) überträgt seine Wärme an den vorgeschalteten Spaltbrenner (3), der bei einer ausreichenden Betriebstemperatur mit der Umsetzung des Brenngas-Luft-Gemisches beginnt. Bei weitgehend katalytischer Verbrennung im Spaltbrenner (3) reduziert sich die Verbrennung im Spaltbrenner (4) bis sie schließlich erlischt.

## Beschreibung

Die Erfindung betrifft einen katalytischen Brenner nach dem Oberbegriff des Patentanspruches 1.

Ein Brenner dieser Art ist der EP 0 578 131 A1 zu entnehmen. Er besitzt eine katalytische Brennerstufe in Form eines ringzylindrischen Spaltbrenners an der Außenwand eines katalytisch beschichteten Zylinderkörpers und bei Bedarf einen ihm nachgeschalteten, ebenfalls katalytisch beschichteten Nachbrenner. Im Spaltbrenner erfolgt eine flammenlose Verbrennung des Brenngas-Luft-Gemisches bei relativ niedrigen Temperaturen zwischen 800 und 1000 °C, bei denen eine NOₓ-Bildung unterbleibt. Der monolitische Brenner dient der flammenlosen Nachverbrennung der noch brennbaren Bestandteile.

In der genannten Schrift wird eine Vorheizung mit einem zugeordneten Startbrenner mit offener Flamme beschrieben, der ebenfalls mit dem Brenngas-Luft-Gemisch betrieben wird. Dieser Startbrenner wird zunächst mit dem Gemisch beaufschlagt. Sobald die Betriebstemperatur der katalytischen Brennerstufe von etwa 300 - 350 °C erreicht ist, wird ein Dreiwegeventil umgeschaltet und nur noch die katalytische Brennerstufe mit dem Gemisch versorgt. Es handelt sich hier um eine Parallelschaltung, die zeitlich getrennt entweder den Betrieb des Startbrenners oder den Betrieb der katalytischen Brennerstufe ermöglicht. Dabei muß eine Umschaltung genau zum richtigen Zeitpunkt erfolgen, um die Vorteile der katalytischen Umsetzung voll nutzen zu können.

Der Erfindung liegt die Aufgabe zugrunde, ein Umschalten des Brenngasstromes ganz zu vermeiden und jeweils genau zur rechten Zeit das Vorheizen mit offener Flamme bzw. die katalytische Umsetzung ohne Flamme zu erreichen. Auf Umschaltelemente soll verzichtet werden.

Die Lösung erfolgt gemäß der Erfindung durch die im Kennzeichen des Patentanspruches 1 genannten Maßnahmen.

Die bisher vorgeschlagene Parallelschaltung der Gasströme wurde bewußt durch eine Serienschaltung ersetzt, und zwar wird entgegengesetzt zu der bisherigen Überlegung die katalytische Brennerstufe zuerst vom kühlen Brenngas-Luft-Gemisch durchströmt und an dessen Ende vom Startbrenner mit offener Flamme verbrannt. Dieser gibt dann seine Wärme an die vorgeschaltete katalytische Brennerstufe ab und startet diese bei einer ausreichenden Betriebstemperatur von etwa 300 - 350 °C.

Der besondere Vorteil liegt in dieser Serienschaltung der beiden Brenner. Das führt dazu, daß zunächst wohl der Startbrenner in Aktion tritt, dann aber ohne jegliche Umschaltung die Reaktion in der katalytischen Brennerstufe beginnt. Sobald nun dort eine weitgehende katalytische Umsetzung des Brenngases erfolgt, erlischt zwangsweise die offene Flamme im Startbrenner, da für diese keine ausreichende Energie mehr vorhanden ist. Somit brennt der Startbrenner mit offener Flamme nur solange dieses zwingend erforderlich ist und die katalytische Brennerstufe ohne Flamme, sobald hierfür die Bedingungen erreicht sind. Eine separate Umschaltung ist nicht erforderlich.

In der konkreten Ausgestaltung empfiehlt es sich, die katalytische Brennerstufe als einen an der katalytisch beschichteten Außenwand eines Zylinderkörpers angeordneten Spaltbrenner auszubilden, dem in Strömungsrichtung des Brenngas-Luft-Gemisches der Startbrenner folgt. Dieser kann am Eingang des Zylinderkörpers liegen oder der dem Spaltbrenner folgende Teil des Zylinderkörpers sein. Am Ende des Spaltbrenners erfolgt eine Umlenkung des Gemisches, das dann weitgehend verbrannt in entgegengesetzter Richtung zur Strömung im Spaltbrenner den Zylinderkörper durchströmt. Noch unverbrannte Bestandteile werden in einem am Ende des Zylinderkörpers angeordneten, ebenfalls katalytisch beschichteten Nachbrenner umgesetzt.

Es empfiehlt sich, die katalytische Brennerstufe und den katalytischen Nachbrenner so anzuordnen, daß sie im Wärmeaustausch zueinander stehen. Das hat zur Folge, daß sich die beiden Katalysatorstufen hinsichtlich der in ihnen umgesetzten Brenngasmengen gegenseitig beeinflussen. Zu diesem Zweck kann vom Nachbrenner je nach der in ihm umgesetzten Brenngasmenge eine mehr oder weniger große Wärmeübertragung an die ihm vorgeschaltete erste Katalysatorstufe erfolgen. Durch diese Wärmerückführung erfolgt eine Verbesserung der Prozeßstabilität in der ersten Stufe. Wird nämlich in der ersten Stufe im Verhältnis zu wenig Brenngas umgesetzt, weil die katalytisch beschichtete Fläche beispielsweise noch nicht genügend aufgeheizt ist, dann erfolgt zwangsweise eine stärkere Umsetzung im Nachbrenner. Durch die Rückführung der Wärme wird die erste Stufe zu einer verstärkten Umsetzung angeregt, so daß sich die beiden Stufen im Sinne einer Prozeßoptimierung ergänzen. Auf der Gegenseite kann es auch sein, daß die Umsetzung im Nachbrenner zu gering ist. In diesem Fall erfolgt eine Wärmezuführung von der ersten Stufe. Die Temperatur im Nachbrenner wird angehoben. Dadurch wird die Umsetzung der Brenngasmenge verbessert.

Bei einem katalytischen Brenner mit einem einen Zylinderkörper umgebenden Spaltbrenner und einem im Zylinderkörper angeordneten Nachbrenner läßt sich die Erfindung einfach verwirklichen. Nach dem Starten der katalytischen Umsetzung im Spaltbrenner durchströmt das teilweise verbrannte Gemisch den Nachbrenner. Infolge eines Wärmeaustauschers durch die Wand des Zylinderkörpers beeinflussen sich die Spaltbrenner und der Nachbrenner gegenseitig. Die Umsetzung der Brenngasmenge wird optimiert. Durch die Anordnung des Nachbrenners im Zylinderkörper erfolgt auch eine Wärmeübertragung an das einströmende Gemisch. Dieses wird vorgewärmt, was ebenfalls zur besseren katalytischen Umsetzung beiträgt.

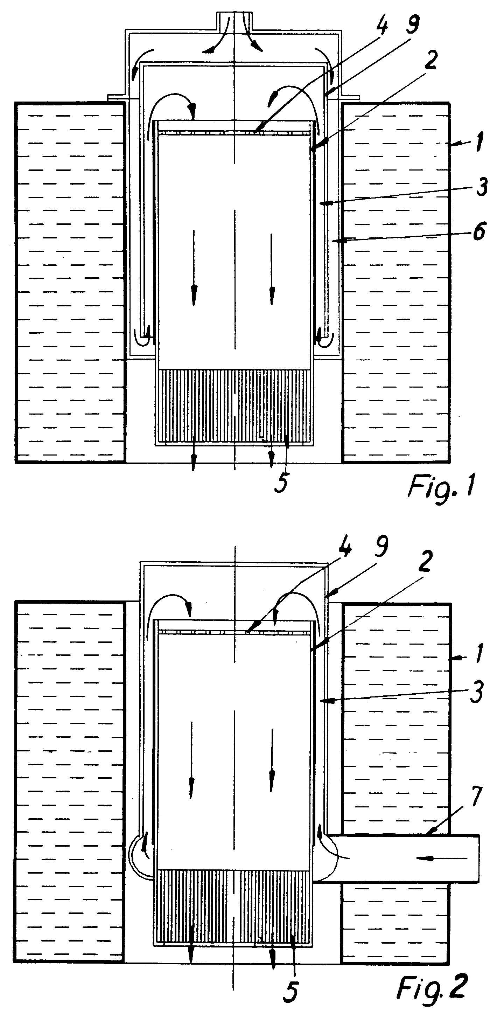

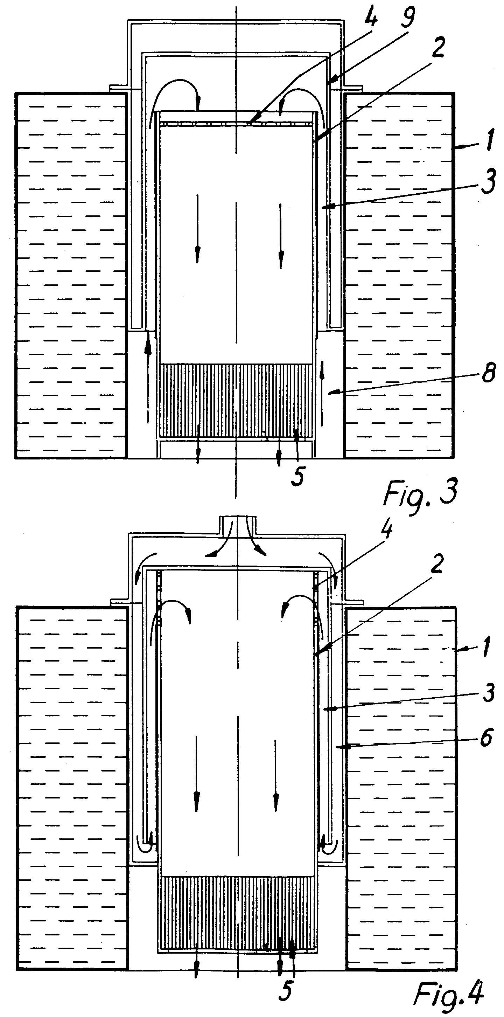

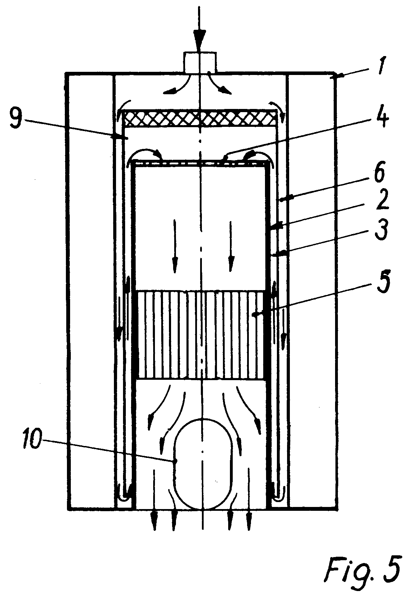

Die Zeichnung stellt Ausführungsbeispiele der Erfindung dar. Es zeigen die Fig. 1 bis 5 je einen vertikalen Schnitt durch einen Wassererwärmer mit einem eingebauten Brenner.

Der Wassererwärmer besitzt einen Wasserraum 1, der von einer Brennereinheit durchsetzt ist. Diese besteht aus einem die katalytisch beschichtete Wand eines Zylinderkörpers 2 umgebenden katalytischen Brennerstufe 3 in Form eines ringzylindrischen Spaltbrenners und einem am Eingang des Zylinderkörpers 2 liegenden Startbrenner 4, der nur schematisch durch ein Brennerblech angedeutet ist. Am Ausgang des Zylinderkörpers 2 sitzt ein ebenfalls katalytisch beschichteter Nachbrenner 5.

Das Brennverfahren läuft folgendermaßen ab: Das Brenngas-Luft-Gemisch strömt durch einen die katalytische Brennerstufe 3 umgebenden Ringzylinder 6 (Fig. 1) oder durch ein den Wasserraum durchdringendes Einströmrohr 7 (Fig. 2) oder durch einen den Nachbrenner 5 umgebenden Ringkanal 8 (Fig. 3) in den Spaltbrenner. Es durchströmt diesen zunächst im kalten Zustand ohne Verbrennung und wird dann in einer Wendekammer 9 umgelenkt. Im Startbrenner 4 erfolgt eine Verbrennung mit offener Flamme. Die Wärme überträgt sich durch die Wand des Zylinderkörpers 2 auf das Brenngas-Luft-Gemisch im Spaltbrenner und zündet dieses bei ausreichenden Betriebstemperaturen von etwa 300 - 350 °C. Ab einem bestimmten Umsatz des Brenngases im Spaltbrenner erlischt die Flamme im Startbrenner 4. Jetzt erfolgt nur noch eine katalytische Umsetzung in der katalytischen Brennerstufe 3 und im Nachbrenner 5.

Im Interesse einer Prozeßstabilisierung erfolgt ein Wärmeaustausch zwischen der katalytischen Brennerstufe 3 und dem Nachbrenner 5 in Abhängigkeit von der in ihnen umgesetzten Brenngasmenge, z.B. anhand der Reaktionstemperatur.

## Patentansprüche

1. Katalytischer Brenner zur flammenlosen Verbrennung eines Brenngas-Luft-Gemisches mit einem das Gemisch mit offener Flamme verbrennenden Startbrenner (4),
dadurch gekennzeichnet, daß das Brenngas-Luft-Gemisch in Reihe eine katalytische Brennerstufe (3) und dann den Startbrenner (4) durchströmt, wobei das vom Startbrenner (4) mit offener Flamme verbrannte Brenngas seine Warme an die vorgeschaltete katalytische Brennerstufe (3) überträgt und diese bei einer ausreichenden Betriebstemperatur mit der Umsetzung des Brenngas-Luft-Gemisches beginnt.

2. Katalytischer Brenner nach Anspruch 1,
dadurch gekennzeichnet, daß sich ab der beginnenden Umsetzung in der katalytischen Brennerstufe (3) die Verbrennung mit offene Flamme im Startbrenner (4) reduziert, bis sie bei weitgehend katalytischer Umsetzung erlischt.

3. Katalytischer Brenner nach den Ansprüchen 1 und 2,
dadurch gekennzeichnet, daß die katalytische Brennerstufe (3) die Form eines ringzylindrischen Spaltbrenners an der katalytisch beschichteten Außenwand eines Zylinderkörpers (2) besitzt, dem in Strömungsrichtung des Brenngas-Luft-Gemisches der Startbrenner (4) und innerhalb des Zylinderkörpers (2) ein ebenfalls katalytisch beschichteter Nachbrenner (5) folgt.

4. Katalytischer Brenner nach den Ansprüchen 1 bis 3,
dadurch gekennzeichnet, daß am Ende des Spaltbrenners (3) eine Wendekammer 9 mit zugeordnetem Startbrenner (4) liegt und daß die katalytische Brennerstufe (3) außerhalb und der Nachbrenner (5) innerhalb des Zylinderkörpers (2) gegenläufig von dem Brenngas-Luft-Gemisch durchströmt werden.

5. Katalytischer Brenner nach den Ansprüchen 1 bis 4,
dadurch gekennzeichnet, daß die katalytische Brennerstufe (3) und der Nachbrenner (5) durch die Wand des Zylinderkörpers (2) im Wärmeaustausch zueinander stehen und daß sie sich je nach den in ihnen jeweils umgesetzten Brenngasmengen hinsichtlich ihres Brennverhaltens gegenseitig beeinflussen und dadurch die Prozeßstabilität verbessern.

6. Katalytischer Brenner nach Anspruch 5,
dadurch gekennzeichnet, daß der Nachbrenner (5) bei zu viel in ihm umgesetzter Brenngasmenge infolge eines Temperaturanstieges vermehrt Wärme an die katalytische Brennerstufe (3) überträgt und die Umsetzung der Brenngasmenge in dieser steigert.

7. Katalytischer Brenner nach Anspruch 5,
dadurch gekennzeichnet, daß der Nachbrenner (5) bei zu wenig in ihm umgesetzter Brenngasmenge infolge eines Temperaturanstieges in der katalytischen Brennerstufe (3) vermehrt Wärme von dieser erhält und zu einer verstärkten Umsetzung der Brenngasmenge angeregt wird.

8. Katalytischer Brenner nach einem der Ansprüche 1 bis 7,
dadurch gekennzeichnet, daß er im Wasserraum eines Wassererwärmers (1) angeordnet ist und daß die Zufuhr des Brenngas-Luft-Gemisches zur katalytischen Brennerstufe (3) durch einen diesen umgebenden Ringzylinder (6) erfolgt (Fig. 1).

9. Katalytischer Brenner nach einem der Ansprüche 1 bis 7,
dadurch gekennzeichnet, daß er im Wasserraum eines Wassererwärmers (1) angeordnet ist und daß die Zufuhr des Brenngas-Luft-Gemisches zur katalytischen Brennerstufe (3) durch ein den Wasserraum durchdringendes Einströmrohr (7) erfolgt (Fig. 2).

10. Katalytischer Brenner nach einem der Ansprüche 1 bis 7,
dadurch gekennzeichnet, daß er im Wasserraum eines Wassererwärmers (1) angeordnet ist und daß die Zufuhr des Brenngas-Luft-Gemisches zur katalytischen Brennerstufe (3) durch einen den Nachbrenner (5) umgebenden Ringkanal (8) erfolgt (Fig. 3).
